(19) Europäisches Patentamt
European Patent Office
Office européen des brevets

(11) **EP 4 143 745 B1**

(12) **EUROPEAN PATENT SPECIFICATION**

(45) Date of publication and mention
of the grant of the patent:
**10.12.2025 Bulletin 2025/50**

(21) Application number: **21751551.9**

(22) Date of filing: **27.07.2021**

(51) International Patent Classification (IPC):
**G06N 3/092** (2023.01)    **G06N 3/006** (2023.01)
**G06N 3/045** (2023.01)    **G06N 7/01** (2023.01)

(52) Cooperative Patent Classification (CPC):
**G06N 3/006; G06N 3/045; G06N 3/0464;
G06N 3/092; G06N 7/01**

(86) International application number:
**PCT/EP2021/071077**

(87) International publication number:
**WO 2022/023384 (03.02.2022 Gazette 2022/05)**

(54) **TRAINING AN ACTION SELECTION SYSTEM USING RELATIVE ENTROPY Q-LEARNING**

TRAINING EINES AKTIONSAUSWAHLSYSTEMS UNTER VERWENDUNG VON RELATIVEM
ENTROPIE-Q-LERNEN

FORMATION D'UN SYSTÈME DE SÉLECTION D'ACTIONS À L'AIDE D'UN APPRENTISSAGE Q
ENTROPIQUE RELATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2020 US 202063057826 P**

(43) Date of publication of application:
**08.03.2023 Bulletin 2023/10**

(73) Proprietor: **GDM Holding LLC
Mountain View, CA 94043 (US)**

(72) Inventors:
• **JEONG, Rae Chan
London N1C 4AG (GB)**
• **SPRINGENBERG, Jost Tobias
London N1C 4AG (GB)**
• **KAY, Jacqueline Ok-Chan
London N1C 4AG (GB)**
• **ZHENG, Daniel Hai Huan
London N1C 4AG (GB)**
• **GALASHOV, Alexandre
London N1C 4AG (GB)**
• **HEESS, Nicolas Manfred Otto
London N1C 4AG (GB)**
• **NORI, Francesco
London N1C 4AG (GB)**

(74) Representative: **Marks & Clerk GST
1 New York Street
Manchester M1 4HD (GB)**

(56) References cited:
**WO-A1-2020/099672    US-A1- 2020 104 680**

• **RILEY SIMMONS-EDLER ET AL: "Q-Learning for
Continuous Actions with Cross-Entropy Guided
Policies", ARXIV.ORG, CORNELL UNIVERSITY
LIBRARY, 201 OLIN LIBRARY CORNELL
UNIVERSITY ITHACA, NY 14853, 25 March 2019
(2019-03-25), XP081157902**

**(Cont. next page)**

- JUNE PREPRINT . ET AL: "QT-Opt: Scalable Deep Reinforcement Learning for Vision-Based Robotic Manipulation Robotic Manipulation View project Robotics Manipulation View project QT-Opt: Scalable Deep Reinforcement Learning for Vision-Based Robotic Manipulation", 28 November 2018 (2018-11-28), XP055863519, Retrieved from the Internet <URL:https://www.researchgate.net/profile/Dmitry-Kalashnikov-2/publication/326029397_QT-Opt_Scalable_Deep_Reinforcement_Learning_for_Vision-Based_Robotic_Manipulation/links/5e9db1eda6fdcca78928bc6d/QT-Opt-Scalable-Deep-Reinforcement-Learning-for-Vision-Based-Robotic-Manipulation.pdf> [retrieved on 20211119]

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model. Some machine learning models are deep models that employ multiple layers of models to generate an output for a received input. For example, a deep neural network is a deep machine learning model that includes an output layer and one or more hidden layers that each apply a non-linear transformation to a received input to generate an output.

US2020/104680 describes a system for training an action selection neural network using imitation learning in latent space. The system uses a discriminator neural network that is trained to process a latent representation of an observation to generate an imitation score characterizing a likelihood that the observation is an expert observation. WO2020/099672 describes Q-learning techniques for large action spaces. To apply Q-learning a maximization over a set of possible actions is required each time that an action needs to be selected for performance by an agent and each time that an update to the Q network parameters is determined; in the described techniques only a relatively small number of sampled actions needs to be evaluated using the Q network.

SUMMARY

This specification generally describes a system implemented as computer programs on one or more computers in one or more locations for training an action selection system that is used to control an agent interacting with an environment to perform a task using reinforcement learning techniques. The reinforcement learning techniques described herein can be referred to as relative entropy Q-learning. The action selection system can comprise a Q neural network and a policy neural network, as will be described in more detail below.

The invention is set out in claim 1.

In implementations the action selection system is used to select to be performed by a mechanical agent being a robot interacting with a real-world environment to perform the task. Thus the method may further comprise using the action selection neural network to control the robot to perform the task while interacting with the real-world environment by obtaining the observations from one or more sensor devices sensing the real-world environment, for example sensor data from an image, distance, or position sensor, or from an actuator of the mechanical agent, and processing the observations using the action selection system to select actions to control the mechanical agent to perform the task.

In some implementations, determining an update to current values of a set of Q neural network parameters of the Q neural network using the state values for the second observations in the experience tuples comprises: for each experience tuple: processing the first observation in the experience tuple using the Q neural network to generate a Q value for the action in the experience tuple; and determining a target Q value for the action in the experience tuple using the state value for the second observation in the experience tuple; determining a gradient of a Q objective function that, for each experience tuple, measures an error between: (i) the Q value for the action in the experience tuple, and (ii) the target Q value for the action in the experience tuple; and determining the update to the current values of the set of Q neural network parameters using the gradient.

In some implementations, determining the target Q value for the action in the experience tuple using the state value for the second observation in the experience tuple comprises: determining the target Q value as a sum of: (i) the reward in the experience tuple, and (ii) a product of a discount factor and the state value for the second observation in the experience tuple.

In some implementations, the error between: (i) the Q value for the action in the experience tuple, and (ii) the target Q value for the action in the experience tuple, comprises a squared error between: (i) the Q value for the action in the experience tuple, and (ii) the target Q value for the action in the experience tuple.

**In** some implementations, the agent is a robotic agent interacting with a real-world environment, and the expert action selection policy is generated by composing waypoint tracking controllers.

According to another aspect there is provided a system comprising: one or more computers; and one or more storage devices communicatively coupled to the one or more computers, wherein the one or more storage devices store instructions that, when executed by the one or more computers, cause the one or more computers to perform operations of the techniques described herein.

According to another aspect there are provided one or more non-transitory computer storage media storing instructions that when executed by one or more computers cause the one or more computers to perform operations of the techniques described herein.

Particular embodiments of the subject matter described in this specification can be implemented so as to realize one or more of the following advantages.

The training system described in this specification can train an action selection system that is used to control an agent interacting with an environment using both on-policy and off-policy experience tuples characterizing previous interactions of the agent with the environment. In particular, the training system can train the action selection system using mixed training data that includes on-policy "exploration" experience tuples generated by the action selection system and off-policy "expert" experience tuples generated by expert action selection policies, e.g., that select actions which are relevant to performing a task. A particular advantage of the techniques described herein is that they can benefit from sub-optimal expert action selection policies, i.e. those that select actions which are only relevant for part of the task, which are highly off-policy, and can effectively combine these with on-policy "exploration" data characterizing interactions of the agent with the environment obtained by using the method. In the context of a robotic agent interacting with a real-world environment, expert action selection policies can be generated by composing (sub-optimal) expert action selection policies of waypoint tracking controllers. Being trained on mixed training data (rather than, e.g., on on-policy training data alone) enables the action selection system to be trained more quickly (e.g., over fewer training iterations) and achieve better performance (e.g., by enabling the agent to perform tasks more effectively). By training the action selection system more quickly, the training system can consume fewer computational resources (e.g., memory and computing power) during training than some conventional training systems.

The training system described in this specification can train a Q neural network on experience tuples representing interaction of the agent with the environment using state values that are determined by importance sampling using a policy neural network. For example, to determine the state value for an observation, the training system can process the preceding observation using the policy neural network to generate a score distribution over a set of possible actions, sample multiple actions in accordance with the score distribution, and determine the state value by combining Q values for the sampled actions. Training the Q neural network using state values determined by importance sampling using the policy neural network can regularize and accelerate the training of the Q network, thus reducing consumption of computational resources by the training system.

The training system described in this specification can train the policy neural network on experience tuples representing previous interaction of the agent with the environment where the agent performed well chosen actions, e.g., actions associated with a non-negative advantage value. The advantage value for a given action can characterize a difference between the return (e.g., cumulative measure of rewards) received by the performing the given action and the return received by performing an average (e.g., randomly selected) action. Training the policy neural network on experience tuples representing effective agent interaction with the environment can accelerate the training of the action selection system (thus reducing consumption of computational resources during training) and improve the performance of the trained action selection system.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example action selection system.
FIG. 2 is a block diagram of an example training system.
FIG. 3 is a flow diagram of an example process for training an action selection system using relative entropy Q-learning.
FIG. 4 is a flow diagram of an example process for determining the state value of an observation.
FIG. 5 is a flow diagram of an example process for updating the current values of the Q network parameters.
FIG. 6 is a flow diagram of an example process for updating the current values of the policy network parameters.
FIG. 7 is a flow diagram of an example process for using an action selection system to select actions to be performed by an agent to interact with an environment.

Like reference numbers and designations in the various drawings indicate like elements.

DETAILED DESCRIPTION

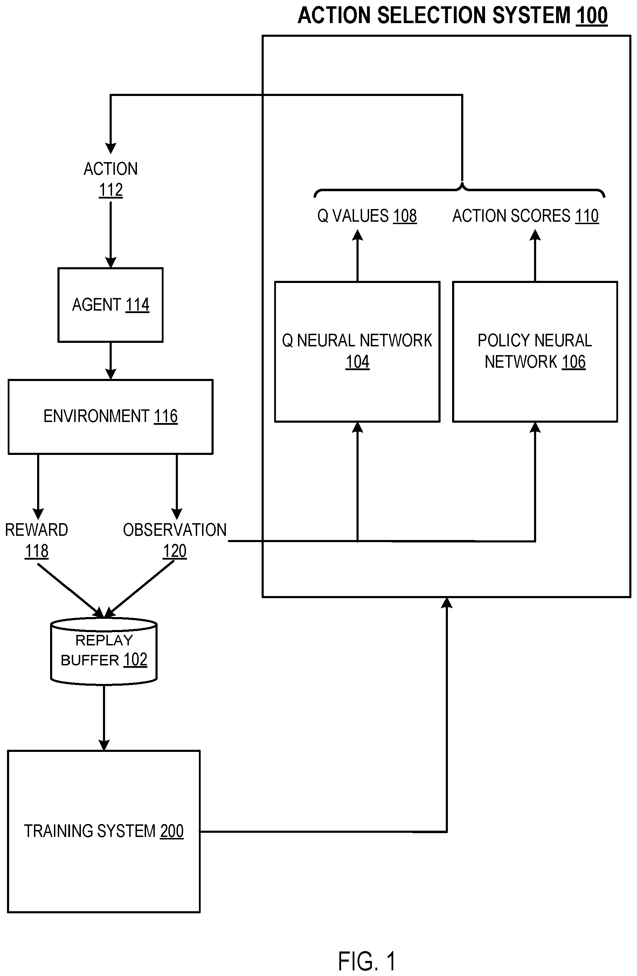

FIG. 1 shows an example action selection system 100. The action selection system 100 is an example of a system implemented as computer programs on one or more computers in one or more locations in which the systems, components, and techniques described below are implemented.

The system 100 selects action 112 to be performed by an agent 114 interacting with an environment 116 at each of multiple time steps to accomplish a goal. At each time step, the system 100 receives data characterizing the current state of the environment 116, e.g., an image of the environment 116, and selects an action 112 to be performed by the agent 114 in response to the received data. Data characterizing a state of the environment 116 will be referred to in this specification as an observation 120. At each time step, the state of the environment 116 at the time step (as characterized by the observation 120) depends on the state of the environment 116 at the previous time step and the action 112 performed by the agent 114 at the previous time step.

At each time step, the system 100 can receive a reward 118 based on the current state of the environment 116 and the action 112 of the agent 114 at the time step. Generally, the reward 118 can be represented a numerical value. The reward 118 can be based on any event in or aspect of the environment 116. For example, the reward 108 can indicate whether the agent 114 has accomplished a goal (e.g., navigating to a target location in the environment 116 or completing a task) or the progress of the agent 114 towards accomplishing a goal e.g. a task.

In some implementations, the environment is a real-world environment and the agent is a mechanical agent interaction with the real-world environment, e.g., moving within the real-world environment (by translation and/or rotation in the environment, and/or changing its configuration) and/or modifying the real-world environment. For example, the agent can be a robot interacting with the environment, e.g., to locate an object of interest in the environment, to move an object of interest to a specified location in the environment, to physically manipulate an object of interest in the environment, or to navigate to a specified destination in the environment; or the agent can be an autonomous or semi-autonomous land, air, or sea vehicle navigating through the environment to a specified destination in the environment.

In these implementations, the observations can include, for example, one or more of images, object position data, and sensor data to capture observations as the agent interacts with the environment, e.g., sensor data from an image, distance, or position sensor or from an actuator.

For example, in the case of a robot the observations can include data characterizing the current state of the robot, e.g., one or more of: joint position, joint velocity, joint force, torque or acceleration, for example gravity-compensated torque feedback, and global or relative pose of an item held by the robot.

In the case of a robot or other mechanical agent or vehicle the observations can similarly include one or more of the position, linear, or angular velocity, force, torque, or acceleration, and global or relative pose of one or more parts of the agent. The observations can be defined in 1, 2, or 3 dimensions, and can be absolute and/or relative observations.

The observations can also include, for example, data obtained by one or more sensor devices which sense a real-world environment; for example, sensed electronic signals such as motor current or a temperature signal; and/or image or video data for example from a camera or a LIDAR sensor, e.g., data from sensors of the agent or data from sensors that are located separately from the agent in the environment.

In the case of an electronic agent the observations can include data from one or more sensors monitoring part of a plant or service facility such as current, voltage, power, temperature, and other sensors and/or electronic signals representing the functioning of electronic and/or mechanical items of equipment.

The actions can be control inputs to control a robot, e.g., torques for the joints of the robot or higher-level control commands, or the autonomous or semi-autonomous land, air, or sea vehicle, e.g., torques to the control surface or other control elements of the vehicle or higher-level control commands.

In other words, the actions can include for example, position, velocity, or force/torque/acceleration data for one or more joints of a robot or parts of another mechanical agent. Actions can additionally or alternatively include electronic control data such as motor control data, or more generally data for controlling one or more electronic devices within the environment, the control of which has an effect on the observed state of the environment. For example, in the case of an autonomous or semi-autonomous land, air, or sea vehicle the actions can include actions to control navigation, e.g., steering, and movement, e.g., braking and/or acceleration of the vehicle.

In some implementations the environment is a simulated environment and the agent is implemented as one or more computers interacting with the simulated environment.

For example, the simulated environment can be a simulation of a robot or vehicle and the action selection network can be trained on the simulation. For example, the simulated environment can be a motion simulation environment, e.g., a driving simulation or a flight simulation, and the agent can be a simulated vehicle navigating through the motion simulation. In these implementations, the actions can be control inputs to control the simulated user or simulated vehicle.

In another example, the simulated environment can be a video game and the agent can be a simulated user playing the video game.

In a further example, the environment can be a protein folding environment such that each state is a respective state of a protein chain and the agent is a computer system for determining how to fold the protein chain. In this example, the actions are possible folding actions for folding the protein chain and the result to be achieved can include, e.g., folding the protein so that the protein is stable and so that it achieves a particular biological function. As another example, the agent can be a mechanical agent that performs or controls the protein folding actions selected by the system automatically without human interaction. The observations can include direct or indirect observations of a state of the protein and/or can be derived from simulation.

Generally in the case of a simulated environment the observations can include simulated versions of one or more of the previously described observations or types of observations and the actions can include simulated versions of one or more of the previously described actions or types of actions.

Training an agent in a simulated environment can enable the agent to learn from large amounts of simulated training data while avoiding risks associated with the training the agent in a real world environment, e.g., damage to the agent due to performing poorly chosen actions. An agent trained in a simulated environment can thereafter be deployed in a real-world environment. That is, the action selection system 100 can be trained on experience tuples representing agent interaction with a simulated environment. After being trained on experience tuples representing agent interaction with the simulated environment, the action selection system 100 can be used to control a real-world agent interacting with a real-world environment.

In some other applications the agent can control actions in a real-world environment including items of equipment, for example in a data center or grid mains power or water distribution system, or in a manufacturing plant or service facility. The observations can then relate to operation of the plant of facility. For example, the observations can include observations of power or water usage by equipment, or observations of power generation or distribution control, or observations of usage of a resource or of waste production. The agent can control actions in the environment to increase efficiency, for example, by reducing resource usage, and/or reduce the environmental impact of operations in the environment, e.g., by reducing waste. The actions can include actions controlling or imposing operating conditions on items of equipment of the plant/facility, and/or actions that result in changes to settings in the operation of plant/facility, e.g., to adjust or turn on/off components of the plant/facility.

Optionally, in any of the above implementations, the observation at any given time step can include data from a previous time step that can be beneficial in characterizing the environment, e.g., the action performed at the previous time step.

The action selection system 100 selects an action 112 to be taken by the agent 114 in the environment 116 at each time step by processing the current observation 120 for the time step using a Q neural network 104 and a policy neural network 106.

The Q neural network 104 processes an input including the current observation 120 to generate a respective Q value 108 for each action in a set of possible actions that can be performed by the agent. A Q value for a given action is an estimate of a cumulative measure of reward (e.g., a time discounted sum of rewards) that would be received over a sequence of time steps if the agent starts in the state represented by the current observation and performs the given action in response to the current observation.

The policy network 104 processes the current observation 120 to generate a set of action scores 110. The policy network 104 can generate a respective action score for each action in the set of possible actions.

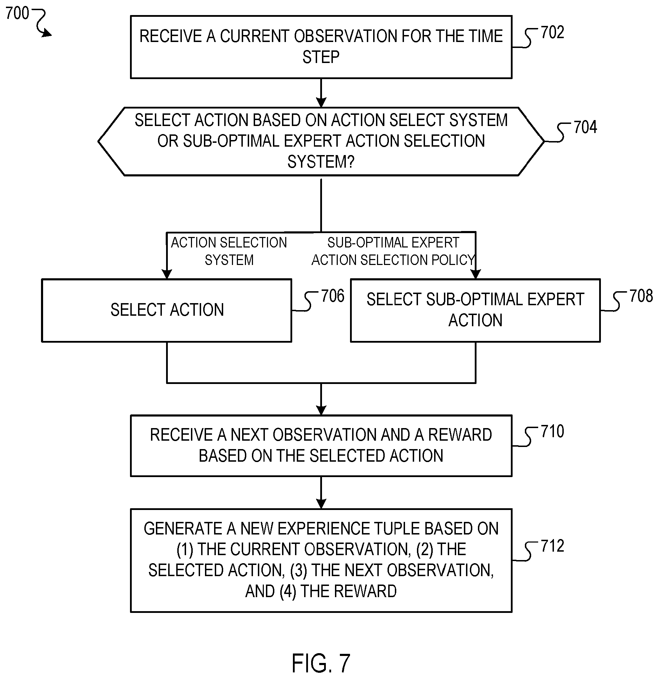

The action selection system 100 selects the action to be performed by the agent at the time step in accordance with the Q values 108 and the action scores 110. For example, the action selection system 100 can combine the Q values 108 and the action scores 110 to generate a respective "final" action score for each possible action, and then select the action to be performed by the agent using the final action scores. An example process for selecting actions to be performed by the agent using the Q neural network 104 and the policy neural network 106 is described in more detail with reference to FIG. 7.

The action selection system 100 can be trained, e.g., by the training system 200. The training system 200 can train the action selection system 100 using a replay buffer 102 which stores training data. The training data stored in reply buffer 102 can be, e.g., experience tuples characterizing interactions of the agent with the environment. Each experience tuple in the replay buffer 102 can include a first observation characterizing an initial state of the environment, an action taken by the agent to interact with the environment (e.g., action 112), a second observation characterizing the state of the environment after the action has been taken by the agent (e.g., observation 120), and a corresponding reward (e.g., reward 118).

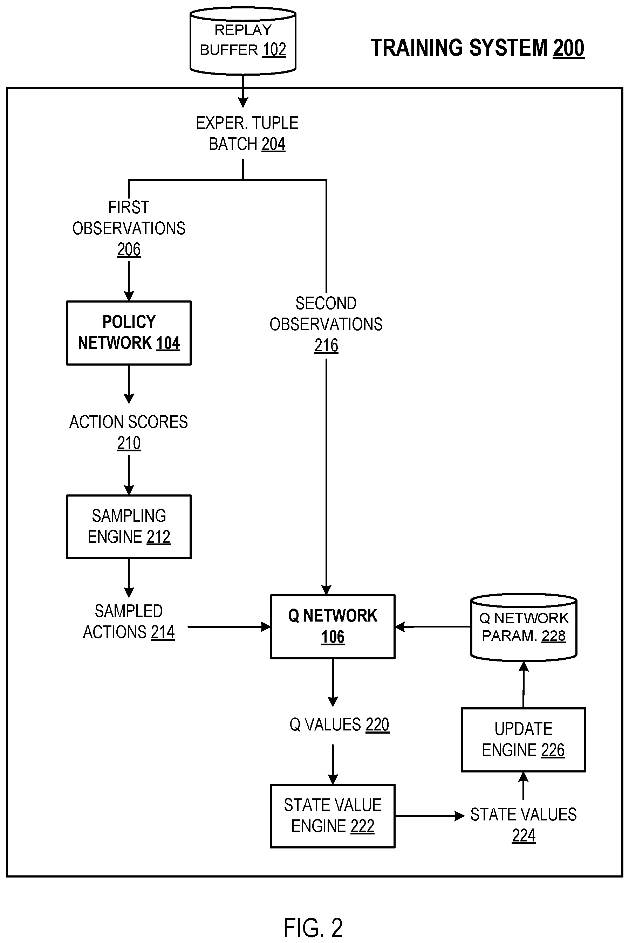

The training system 200 can train the action selection system 100 by updating the network parameter values of the Q neural network 104 and, optionally, the policy neural network 106 at each of multiple iterations. The training system 200 can update the network parameter values of the Q neural network and the policy neural network at each iteration by sampling a batch of experience tuples from the replay buffer 102, and training the Q neural network and the policy neural network on the sampled experience tuples. An example process for training the action selection system is described in more detail with reference to FIG. 2.

FIG. 2 shows an example training system 200. The training system 200 is an example of a system implemented as computer programs on one or more computers in one or more locations in which the systems, components, and techniques described below are implemented.

The training system 200 trains a Q network 106, and, optionally, a policy neural network 104, that is used to control an agent interacting in an environment to perform a task. The training system 200 trains the Q network 106 and policy neural network 104 of the action selection system by updating the current values of the Q network parameters and policy neural network parameters at each of a series of iterations.

At each iteration, the training system 200 samples a batch (set) of experience tuples 204 from the replay buffer 102. Each experience tuple includes a first observation of the environment, an action taken by the agent in response to the first observation of the environment, a second observation of the environment after the action has been taken, and a reward for taking the action. For example, the system can randomly sample a batch of experience tuples from the replay buffer 102.

At each iteration and for each experience tuple in the batch of experience tuples 104, the training system 100 processes the first observation from the experience tuple using the policy network 104 to generate a respective set of action scores 110 for each action in a set of possible actions that can be taken by the agent.

At each iteration and for each experience tuple in the batch of experience tuples 204, the training system 200 samples multiple actions from the set of possible actions in accordance with the action scores. The training system 100 can use a sampling engine 212 to sample M actions in accordance with the action scores for each first observation, where $M > 2$ is a positive integer. For example, the sampling engine 212 can process the action scores (e.g., using a soft-max function) to obtain a probability distribution over the set of possible actions, and then independently sample the M actions from the probability distribution over the set of possible actions.

At each iteration and for each experience tuple in the batch of experience tuples 204, the training system 200 processes the second observation using the Q network 106 to generate respective Q values for each sampled action, e.g., Q values 220. For example, the Q network 106 can process the second observation from the experience tuple to generate respective Q values for each action in the set of possible actions, and the Q values corresponding to the sampled actions can be determined from the generated Q values.

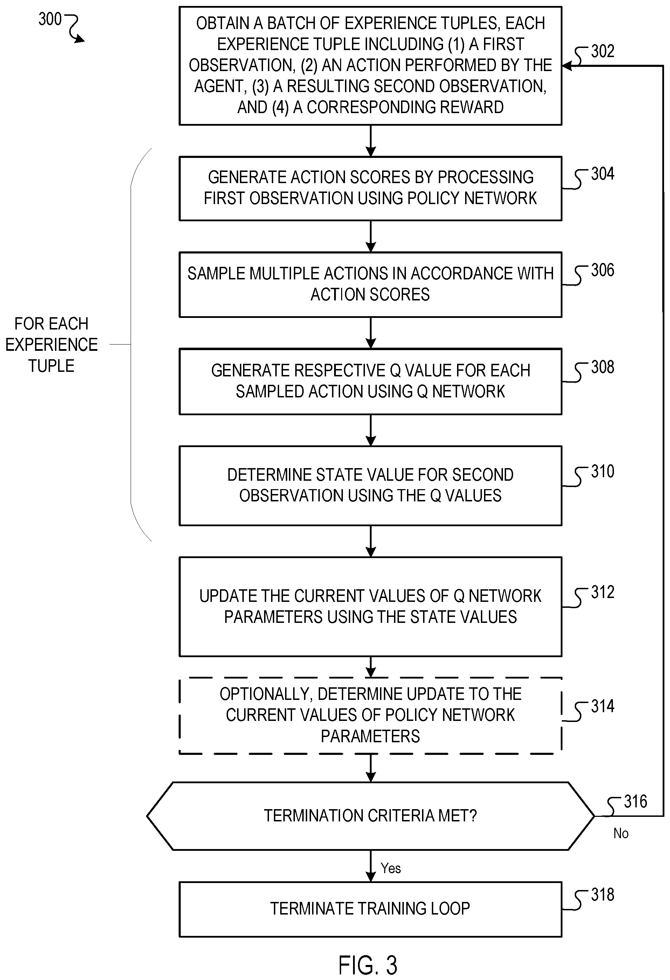

At each iteration and for each experience tuple in the batch of experience tuples 104, the training system 200 generates a respective state value for the second observation using the state value engine 222. A state value for a state can represent, e.g., an estimate for a cumulative measure of rewards (e.g., a time-discounted sum of rewards) that would be received by the agent over successive steps if the agent started in the state. The state value engine 222 can process the respective Q values to determine the respective state value for the second observation. For example, the state value engine 222 can determine the state value as a linear combination of the Q values, as is discussed in further detail below with reference to FIG. 3.

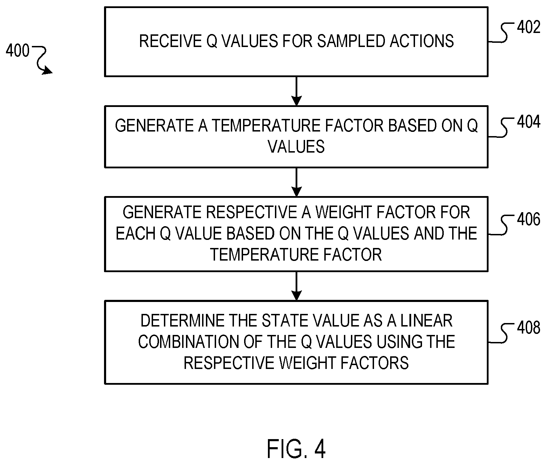

At each iteration, the training system 200 updates the current values of the Q network parameters 228 of Q network 106 using an update engine 226. The update engine 226 processes the state values 224 to generate the updates to the current values of the Q network parameters 228, e.g., using gradients of a Q objective function that depends on the state values 224. An example process for updating the current values of the Q network parameters is described in more detail with reference to FIG. 4.

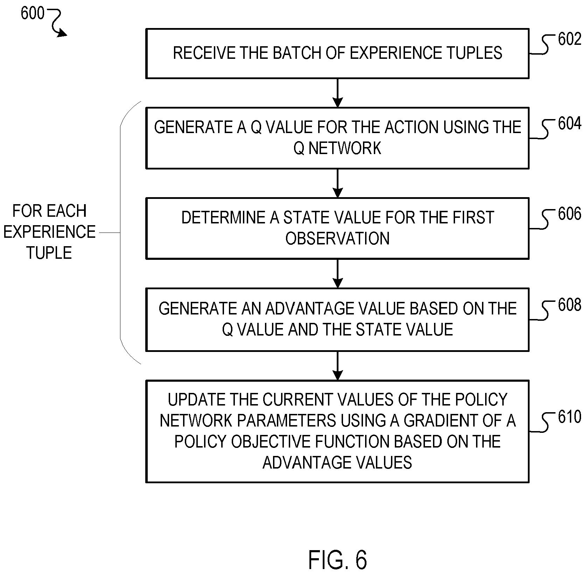

Optionally, at each iteration, the training system 200 can update the current values of the policy neural network. For example, the training system can update the policy neural network parameter values using a gradient of a policy objective function, e.g., as is described in FIG. 6. Updating the values of the policy neural network parameters can facilitate and regularize the training of the Q neural network.

FIG. 3 is a flow diagram of an example process for training an action selection system using relative entropy Q-learning. For convenience, the process 200 will be described as being performed by a system of one or more computers located in one or more locations. For example, a training system, e.g., the training system 100 of FIG. 1, appropriately programmed in accordance with this specification, can perform the process 200.

Prior to training, the system can initialize the network parameter values of the policy neural network and the Q neural network in any appropriate way. For example, the system can randomly initialize the network parameter values of the policy neural network and the Q neural network.

At each iteration (i.e., of multiple training iterations), the system obtains a batch of experience tuples from a replay buffer, each experience tuple including (1) a first observation, (2) an action performed by the agent, (3) a resulting second observation, and (4) a corresponding reward (302). For example, the system can sample a batch of experience tuples randomly to provide a representative sampling of the replay buffer over multiple iterations. Each experience tuple in the replay buffer can represent a previous interaction of the agent with the environment when the agent was controlled by the action selection system, or when the agent was controlled by an expert action selection policy, e.g., as is described with reference to FIG. 7.

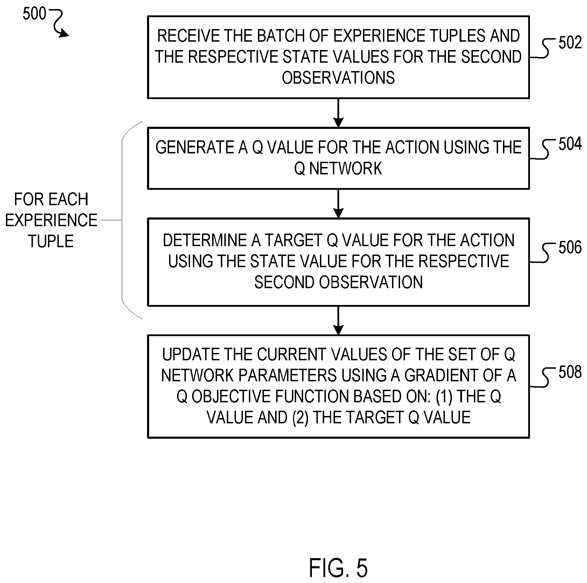

At each iteration and for each experience tuple, the system generates action scores by processing the first observation in the experience tuple using a policy neural network (304). The system generates a respective action score for each action in the possible set of actions given the first observation s. In some implementations, the system can maintain a set of target policy neural network parameters and a set of current policy network parameters. The system can generate these action scores using the target policy neural network values. The system can update the current policy neural network parameter values at each iteration, as is discussed in further detail with reference to FIG. 5. The system can update the target policy neural network parameters to the current policy neural network parameter values every U iterations, where U is a positive integer. Maintaining a separate set of target policy network parameters whose values are periodically updated to the current policy neural network values can stabilize and regularize training.

The policy neural network can have any appropriate neural network architecture that enables it to perform its described function, i.e., processing an observation of the environment to generate a respective action score for each action in the set of possible actions. In particular, the policy neural network can include any appropriate types of neural network layers (e.g., fully-connected layers, attention-layers, convolutional layers, etc.) in any appropriate numbers (e.g., 1 layer, 5 layers, or 25 layers), and connected in any appropriate configuration (e.g., as a linear sequence of layers). In a particular example, the policy neural network can include a sequence of convolutional neural network layers followed by a fully-connected layer, where the fully-connected layer includes a respective neuron corresponding to each action in the set of possible actions.

At each iteration and for each experience tuple, the system samples multiple actions in accordance with the action scores (306). The system can sample $M$ actions for the experience tuple in accordance with the action scores, where $M > 2$ is a positive integer. For example, the system can process the action scores (e.g., using a soft-max function) to obtain a probability distribution over the set of possible actions, and then independently sample the $M$ actions from the probability distribution over the set of possible actions.

At each iteration and for each experience tuple, the system generates a respective Q value for each sampled action (308) by processing the second observation of the state of the environment. The system can generate the respective Q values using a Q neural network. The system can process the second observation of the state to generate respective action scores for the set of possible actions, and match the sampled actions to the appropriate action scores generated using the Q network. In some implementations, the system can maintain a set of target Q neural network parameters and a set of current Q neural network parameters. The system can generate these Q values using the target Q neural network values. The system can update the current Q network parameter values at each iteration, as is discussed in further detail with reference to FIG. 4. The system can update the target Q neural network parameter values to the current Q neural network parameter values every $V$ iterations, where $V$ is a positive integer. Maintaining a separate set of target Q neural network parameters whose values are periodically updated to the current Q neural network values can stabilize and regularize training.

The Q neural network can have any appropriate neural network architecture that enables it to perform its described function, i.e., processing an observation of the state of the environment to generate a respective Q value for each action in a set of possible actions. In particular, the Q neural network can include any appropriate types of neural network layers (e.g., fully-connected layers, attention-layers, convolutional layers, etc.) in any appropriate numbers (e.g., 1 layer, 5 layers, or 25 layers), and connected in any appropriate configuration (e.g., as a linear sequence of layers). In a particular example, the Q neural network can include a sequence of convolutional neural network layers followed by a fully-connected layer, where the fully-connected layer includes a respective neuron corresponding to each action in the set of possible actions.

At each iteration and for each experience tuple, the system determines a state value for the second observation using the corresponding Q values (310). The system can determine the respective state value for a second observation using a state value function. For example, the state value function can determine the respective state value of a second observation as a linear combination of the corresponding Q values, as is discussed in further detail with reference to FIG. 4.

At each iteration, the system determines an update to the current Q network parameter values using the state values (312). The system can generate updates to the current Q network parameter values by determining the gradient of a Q objective function. For example, for each experience tuple, the Q objective function can measure an error between the Q value of the action in the experience tuple and a target Q value based on the state value, as is discussed in further detail in FIG. 5.

Optionally, at each iteration, the system can determine an update the current policy neural network parameter values (314). Updating the policy neural network parameters can enable the system better train and regularize the Q neural network parameter values. For example, the system can determine the update using a gradient of a policy objective function, as is discussed in further detail in FIG. 6.

At each iteration, the system determines whether termination criteria for the training have been met (316). If the termination criteria have not been met, the training loops back to step 202. For example, the termination criteria can include the system performing a predefined number of iterations. Once the system has performed the predefined number of iterations, the system can terminate training.

If the system determines that the termination criteria have been met, the system terminates the training loop (318).

FIG. 4 is a flow diagram of an example process for determining the state value of a second observation in an experience tuple. For convenience, the process 400 will be described as being performed by a system of one or more computers located in one or more locations. For example, a state value engine, e.g., the state value engine 222 of FIG. 2, appropriately programmed in accordance with this specification, can perform the process 400.

The system performs the process 400 during each training iteration, e.g., during step 310 of the training process described in FIG. 3.

The system receives the respective Q values of the sampled actions (402) corresponding to the particular experience tuple including the second observation. The Q values can be generated using a Q network, e.g., as described in step 308 of FIG. 3.

The system generates a temperature factor based on the Q values (404). The temperature factor can first be initialized, and then updated using the gradient of a (Langrangian) dual function of the temperature factor. For example, the temperature factor can be initialized as,

$$\eta_0 = \frac{1}{|B|}\sum_{n=1}^{N}\sigma_M\left(Q_{\phi'}(a_{nm}, s)\right), \qquad (1)$$

where $|B|$ is the number of experience tuples in the batch of experience tuples, $n$ indexes the experience tuples, M is the number of action samples, $m$ indexes the action samples, $Q_{\phi'}(a_{nm}, s)$ represents the Q value of a state-action pair, $s$ represents the observation of the state (here, the second observation), $a_{mn}$ represents the $m^{th}$ sampled action for the $n^{th}$ experience tuple, and $\sigma_M(.)$ represents the standard deviation across the M sampled actions. The system can then optimize a dual function of the temperature factor using multiple steps of gradient descent (e.g., using any appropriate gradient descent method, such as ADAM) for a particular experience tuple, as

$$g(\eta_s) = \frac{1}{|B|}\eta_s\epsilon + \eta_s\log\left\{\frac{1}{M}\sum_{j=1}^{M}\exp\left(\frac{Q_{\phi'}(a_j,s)}{\eta_s}\right)\right\}, \qquad (2)$$

where $g(\eta_s)$ is the dual function for the temperature factor $\eta_s$, $|B|$ represents the number of experience tuples in the batch of experience tuples, $\varepsilon$ represents a regularization parameter, $j$ indexes the sampled actions, M represents the number of sampled actions, and $Q_{\phi'}(a_j, s)$ is the Q value for the sampled action $a_j$.

The system generates a respective weight factor for each Q value based on the Q values and the temperature factor (406). The respective weight factors can be functions of the Q values and the respective temperature factor. For example, the respective weight factor for a sampled action $a_j$ can be determined as,

$$w_j = \frac{\exp\left(\frac{Q_{\phi'}(a_j,s)}{\eta_s}\right)}{\sum_{k=1}^{M}\exp\left(\frac{Q_{\phi'}(a_k,s)}{\eta_s}\right)}, \qquad (3)$$

where $w_j$ represents the weight factor, $j$ and $k$ index the sampled actions, $\eta_s$ represents the temperature factor, and $Q_{\phi'}(a_j, s)$ represents the Q value for a sampled action $a_j$.

The system determines the state value as a linear combination of the Q values using the respective weight factors (408). For example, determining the state value can be represented as,

$$V^{\pi}(s) = \sum_{j=1}^{M} w_j \cdot Q_{\phi'}(a_j, s), \qquad (4)$$

where $V^{\pi}(s)$ represents the state value of an observation s under policy $\pi$, j indexes the sampled actions, $w_j$ represents the weight factor, and $Q_{\phi'}(a_j, s)$ represents the Q value.

FIG. 5 is a flow diagram of an example process for updating the current values of the Q network parameters. For convenience, the process 500 will be described as being performed by a system of one or more computers located in one or more locations. For example, an update engine, e.g., the update engine 226 of FIG. 2, appropriately programmed in accordance with this specification, can perform the process 500.

The system performs the process 500 at each training iteration, e.g., during step 312 of FIG. 3. For convenience, the system is said to perform the steps 402-408 at a "current" iteration.

The system receives the batch of experience tuples and the respective state values for the second observations in the experience tuples (502) for the current iteration. The experience tuples each include a first observation of the environment, an action taken by the agent, a second observation of the environment after the action is taken, and a corresponding reward.

For each experience tuple, the system processes the first observation in the experience tuple using the Q network to generate a Q value for the action in the experience tuple (504).

For each experience tuple, the system determines a target Q value for the action in the experience tuple using the state value for the second observation (506). The system can determine the target Q value based on the state value for the second observation and the reward. For example, the system can determine the target Q value as,

$$Q^*(r, s') = r + \gamma V^\pi(s'), \qquad (5)$$

where $r$ represents the reward, $s'$ represents the second observation, $\gamma$ is a discount factor (e.g., represented as a positive floating point value, e.g. less than 1), and $V^\pi(s')$ represents the state value of the second observation.

The system updates the current values of the set of Q network parameters using a gradient of a Q objective function that, for each experience tuple, measures an error between: (1) the Q value for the action in the experience tuple, and (2) the target Q value for the action in the experience tuple (508). The system can update the current values of the Q network parameters using any appropriate method, such as stochastic gradient descent with or without momentum, or ADAM. For example, the system can update the current Q network parameter values using a squared error Q objective function represented as,

$$\frac{1}{|B|}\Sigma_{(s,a,r,s') \epsilon B}\Big( Q^*(r, s') - Q_\phi(a, s)\Big)^2, \qquad (6)$$

where B represents the batch of experience tuples, |B| denotes the number of experience tuples in the batch of experience tuples, ($s$, $a$, $r$, $s'$) represents an experience tuple with first observation s, action $a$, reward $r$, and second observation $s'$, Q'($r$, $s'$) represents the target Q value, and $Q_\phi(a, s)$ represents the Q value for the action.

In some implementations, the system maintains a set of target Q neural network parameter values and a set of current Q neural network parameter values. The system can generate the Q values using the current set of Q neural network parameter values and the target Q values using the target Q neural network values. The system can update the current Q network parameter values at each iteration using equation 6. Every U iterations, where U is a positive integer, the system can update the target Q network parameter values to be equal to the current Q network parameter values. Maintaining distinct target and current Q network parameter values can regularize and stabilize training.

FIG. 6 is a flow diagram of an example process for updating the current values of the policy network parameters. For convenience, the process 600 will be described as being performed by a system of one or more computers located in one or more locations.

The system optionally performs the process 600 at each training iteration, e.g., during step 314 of FIG. 3. For convenience, the system is said to perform the steps 602-610 at a "current" iteration.

The system receives the batch of experience tuples (602) for the current iteration. Each experience tuple can include a first observation of the state of the environment, an action taken by the agent in response to the first observation, a second observation of the state of the environment, and a corresponding reward.

For each experience tuple, the system processes the first observation in the experience tuple using the Q neural network to generate a Q value for the action in the experience tuple (604).

For each experience tuple, the system determines a state value for the first observation (606). The system can determine a state value for the first observation as a linear combination of the corresponding Q values, e.g., using the method of equations 3 and 4.

For each experience tuple, the system generates an advantage value based on the Q value and the state value (608). The system can generate the advantage value for the experience tuple as the difference between the Q value and the state value, e.g., represented as,

$$A^\pi(a, s) = Q_{\phi'}(a, s) - V^\pi(a, s), \qquad (7)$$

where $a$ represents the action, $s$ represents the first observation, $\pi$ represents the policy network, $A^\pi(a, s)$ represents the advantage value, $Q_\phi(a, s)$ represented the Q value generated using the target network parameters $\phi'$, and $V^\pi(a, s)$ represents the state value.

The system updates the current values of the policy network parameters using the gradient of a policy objective function based on the advantage values (510). The policy objective function can be based only on non-negative advantage values. Using only the non-negative advantage values can enable the system to update the current policy neural network parameter values using only the actions whose values are estimated (e.g., by the advantage values) to be higher than the average value of the policy. The system can perform the updates using any appropriate gradient descent method, such as stochastic gradient descent, or ADAM. For example, the policy objective function can be represented as,

$$-\frac{1}{|B|}\Sigma_{(s,a,r) \epsilon B}\, \mathbb{I}[A^\pi(a, s) \geq 0] \cdot \log\big(\pi_\theta(a|s)\big), \qquad (8)$$

where B represents the batch of experience tuples, |B| represents the number of experience tuples in the batch of experience tuples, ($s$, $a$, $r$) represents an experience tuple with $s$ representing the first observation, $a$ representing the action, and $r$ representing the reward, $\mathbb{I}[.]$ represents an indicator function (e.g., a function which return 1 if the condition is true, or 0 if the condition is false), $A^\pi(a, s)$ represents an advantage value, and $\pi_\theta(a|s)$ represents the action score generated using the policy neural network $\pi_\theta$ using current policy network parameters $\theta$.

In some implementation, the system can maintain a set of target policy neural network parameters, and a set of current policy neural network parameters. The system can update the current policy neural network parameter values at each iteration using equation (8). Every V iterations, the system updates the target policy neural network parameter values to be the current policy neural network parameter values, where V is a positive integer. Maintaining separate target and current policy neural network parameters can regularize and stabilize training.

FIG. 7 is a flow diagram of an example process for using an action selection system to select actions to be performed by an agent to interact with an environment. For convenience, the process 600 will be described as being performed by a system of one or more computers located in one or more locations.

For convenience, the process 700 will be described with reference to selecting an action to be performed by the agent at a "current" time step.

The system receives a current observation for the current time step (702). The current observation can include, e.g., observations about the positions, velocities, and accelerations of objects in the environment, or about the joint positions, velocities, and accelerations of the joints of a robotic agent.

The system selects an action to be performed by the agent at the current time step using either the action selection system, or an expert action selection policy, in particular a sub-optimal expert action selection policy (704). The expert action selection policy may comprise a learned sequence of actions for performing part of the task, e.g. for moving a gripper to a location in the environment, or for picking up an object in the environment. A sub-optimal expert action selection policy can be a policy which, when used to control the agent, can enable the agent to achieve at least partial task success. The system can select between using the action selection system or the sub-optimal expert action selection policy stochastically, e.g., with a predefined probability of choosing each one or other. The action selection system can be, e.g., an action selection system being trained by the training system 100 of FIG. 1, and the (sub-optimal) expert action selection policy can be, e.g., for a robotic agent interacting in a real-world environment, generated by composing waypoint tracking controllers. In implementations a waypoint tracking controller is a controller for controlling actions of a robot based on a set of waypoints which have been provided to the controller. For example the waypoint tracking controller may be a learned controller that provides outputs for controlling a part of the robot to move along a path defined by a set of one or more waypoints. The waypoints may have been specified by a user via a user interface. This can provide a simple and intuitive way for a user to specify a desired behavior without the need for a human demonstration or reward shaping. The expert action selection policy may be generated by composing, i.e. combining, waypoint tracking controllers. For example a waypoint tracking controller may specify a particular behavior such as controlling a part of the robot to move along a path, and the expert action selection policy may be generated by composing, i.e. combining, the behaviors of multiple waypoint tracking controllers e.g. to operate sequentially and/or in parallel. Examples of composing waypoint tracking controllers are described in more detail with reference to: Rae Jeong, et al., "Learning Dexterous Manipulation from Suboptimal Experts," arXiv:2010.08587v2, 5 Jan. 2021. More generally the expert action selection policy may be generated by composing, i.e. combining, the behaviors of any type of learned controllers e.g. a controller based on a previously trained controller action selection neural network.

If the system selects the action selection system, the action selection system selects the action (706). The action selection system can be the one currently being trained, e.g., by the training system 100 of FIG. 1. The action selection system can select the action to be taken by the agent by generating a set of final action scores for each action in the possible set of actions, and selecting the action in accordance with the final action scores, e.g., the action with the greatest respective final action score. For example, the action selection system can process the current observation for the time step using the policy neural network to generate a respective action score for each action in the set of possible actions, and process the current observation for the time step using the Q neural network to generate a respective Q value for each action in the set of possible actions. The action selection system can then determine a final action score for each action based on the action score for the action, and the Q value for the action, e.g., where a respective final action score is determined as

$$\pi(a|s) \cdot \exp\left(\frac{Q(a,s)}{\eta_s}\right), \qquad (9)$$

where $a$ represents the action, $s$ represents the current observation, $\pi(a|s)$ represents the action score, $Q(a, s)$ represents the Q value, and $\eta_s$ represents a temperature factor (e.g., as in equations 3 and 4). The action selection system can select the action to be performed by the agent in accordance with the final action scores, e.g., by selecting action corresponding to the largest final action score.

During training, in implementations where the system maintains a set of target neural network parameters and a set of current neural network parameters for the Q network, the policy network, or both, the action selection system can use the current neural network parameters values for each of the policy and Q networks.

If the system selects the sub-optimal expert action selection policy, the sub-optimal expert action selection policy selects the action (708). For example, the agent can be a robotic agent interacting in an environment, and the expert action selection policy can be generated by composing waypoint tracking controllers.

The system receives a next observation of the environment and a reward based on the selected action (710). For example, for a robotic agent interacting in the environment, the next observation can be the result of moving each of a set of robotic joints in respective ways and seeing what effect it has on the environment.

The system generates a new experience tuple based on (1) the current observation, (2), the selected action, (3) the next observation, and (4) the reward (712). The system generates the new experience tuple from the four parts, and adds the new experience tuple to the replay buffer.

Intertwining action selection between the action selection system and the sub-optimal expert action selection policy can generate mixed on-policy "exploration" experience tuples and off-policy "expert" experience tuples for training data. The system can add these mixed experience tuples to the replay buffer for training. Training the action selection system using mixed training data (rather than, e.g., on on-policy training data alone) can enable the action selection system to be trained more quickly (e.g., over fewer training iterations) and achieve better performance (e.g., by enabling the agent to perform tasks more effectively). By training the action selection system more quickly, the training system can consume fewer computational resources (e.g., memory and computing power) during training than some conventional training systems.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which can also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program can, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what can be claimed, but rather as descriptions of features that can be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features can be described above as acting in certain combinations and even initially be claimed as such, one or more features from a claimed combination can in some cases be excised from the combination, and the claimed combination can be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

**Claims**

1. A method performed by one or more data processing apparatus for training an action selection system (100) that is used to select actions to be performed by an agent (114) interacting with an environment (116) to perform a task, wherein the action selection system comprises a Q neural network (104) and a policy neural network (106), the method comprising, at each of a plurality of iterations:

obtaining a batch of experience tuples (204) characterizing previous interactions of a simulated or real-world version of the agent with the environment from a replay buffer (102), wherein each experience tuple comprises: (i) a first observation characterizing a state of the environment, (ii) an action performed by the agent in response to the first observation, (iii) a second observation characterizing a state of the environment after the agent performs the action in response to the first observation, and (iv) a reward received as a result of the agent performing the action in response to the first observation;

for each experience tuple, determining a state value (224) for the second observation in the experience tuple by importance sampling actions using the policy neural network; and

determining an update to current values of a set of Q neural network parameters of the Q neural network using the state values (224) for the second observations in the experience tuples;

the method further comprising:

determining the state value for the second observation as a linear combination of the Q values for the importance sampled actions (214) by:

determining a temperature factor based on the Q values for the sampled actions;

determining a respective modified Q value for each sampled action as a ratio of: (i) the Q value for the sampled action, and (ii) the temperature factor;

applying a softmax function to the modified Q values to determine a weight factor for each sampled action; and

determining the state value for the second observation as a linear combination of the Q values for the sampled action, wherein the Q value for each sampled action is scaled by the weight factor for the sampled action;

wherein the state value for the second observation is computed as:

$$V^{\pi}(s') = \sum_{j=1}^{M} w_j \cdot Q_{\phi'}(a_j, s')$$

wherein $V^{\pi}(s')$ is the state value for the second observation, $j$ indexes the sampled actions, M is a number of sampled actions, $w_j$ is the weight factor for sampled action $a_j$, $Q_{\phi'}(a_j, s')$ is the Q value for sampled action $a_j$, and each weight factor $w_j$ is computed as:

$$w_j = \frac{\exp\left(\dfrac{Q_{\phi'}\left(a_j, s'\right)}{\eta_s}\right)}{\sum_{k=1}^{M} \exp\left(\dfrac{Q_{\phi'}\left(a_k, s'\right)}{\eta_s}\right)}$$

wherein *k* indexes the sampled actions and $\eta_s$ is the temperature factor; and
wherein the Q objective function is computed as:

$$\frac{1}{|\mathcal{B}|} \sum_{(s,a,r,s') \in \mathcal{B}} \left( r + \gamma V^\pi(s') - Q_\phi(a,s) \right)^2$$

wherein $|\mathcal{B}|$ is a number of experience tuples in the batch of experience tuples, each (*s*, *a*, *r*, *s'*) is an experience tuple in the batch of experience tuples $\mathcal{B}$, wherein s is the first observation, *a* is the action, *r* is the reward, and *s'* is the second observation, $\gamma$ is a discount factor, $V^\pi(s')$ is the state value for the second observation in the experience tuple, and $Q_\phi(a, s)$ is the Q value for the action in the experience tuple; and
wherein determining the update to current values of a set of Q neural network parameters of the Q neural network using the state values for the second observations in the experience tuples comprises, for each experience tuple, determining a gradient of the Q objective function, and determining the update to the current values of the set of Q neural network parameters using the gradient;
wherein the agent comprises a mechanical agent, the method further comprising using the action selection system to select actions to be performed by the mechanical agent when interacting with a real-world environment to perform a task in the real-world environment, wherein the observations relate to the real-world environment and are from one or more sensor devices which sense the real-world environment: or
wherein the agent is an electronic agent configured to control actions for controlling or imposing operating conditions on electronic and/or mechanical items of equipment, the method further comprising using the action selection system to select actions to be performed by the agent when interacting with electronic and/or mechanical items of equipment within a real-world environment of a manufacturing plant or service facility, wherein the observations include observations of power or water usage by the items of equipment from one or more sensors monitoring parts of the manufacturing plant or service facility, wherein the action selection system is trained to reduce the power consumption or the water use by the production plant or the service facility.

2. The method of claim 1, wherein determining the temperature factor based on the Q values for the sampled actions comprises, at each of one or more optimization iterations:

   determining a gradient of a dual function with respect to the temperature factor, wherein the dual function depends on: (i) the temperature factor, and (ii) the Q values for the sampled actions;
   adjusting a current value of the temperature factor using the gradient of the dual function with respect to the temperature factor.

3. The method of claim 2, wherein the dual function is computed as:

$$g(\eta_s) = \frac{1}{|\mathcal{B}|} \eta_s \epsilon + \eta_s \log \frac{1}{M} \sum_{j=1}^{M} \exp\left( \frac{Q_{\phi'}(a_j, s)}{\eta_s} \right)$$

wherein $g(\eta_s)$ is the dual function evaluated for temperature factor $\eta_s$, $|\mathcal{B}|$ denotes a number of experience tuples in the batch of experience tuples, $\varepsilon$ is a regularization parameter, *j* indexes the sampled actions, *M* is a number of sampled actions, and $Q_\phi(a_j, s)$ is the Q value for sampled action $a_j$.

4. The method of any preceding claim, further comprising, at each of the plurality of iterations, determining an update to current values of a set of policy neural network parameters of the policy neural network, comprising:

   for each experience tuple:

      processing the first observation in the experience tuple using the Q neural network to generate a Q value for the action in the experience tuple;
      determining a state value for the first observation in the experience tuple; and
      determining an advantage value for the experience tuple as a difference between:

(i) the Q value for the action in the experience tuple, and (ii) the state value for the first observation in the experience tuple; and

determining the update to the current values of the set of policy neural network parameters of the policy neural network based on only the experience tuples having a non-negative advantage value.

5. The method of claim 4, wherein determining the update to the current values of the set of policy neural network parameters of the policy neural network based on only the experience tuples having a non-negative advantage value comprises:

determining a gradient of a policy objective function that depends on only the experience tuples having a non-negative advantage value; and
determining the update to the current values of the set of policy neural network parameters using the gradient.

6. The method of claim 5, wherein for each experience tuple having a non-negative advantage value, the policy objective function depends on an action score for the action in the experience tuple that is generated by processing a first observation in the experience tuple using the policy neural network; in particular wherein the policy objective function is computed as:

$$-\frac{1}{|\mathcal{B}|} \sum_{(s,a,r)\in\mathcal{B}} \mathbb{I}[A^{\pi}(a,s) \geq 0] \log \pi_{\theta}(a|s)$$

wherein $|\mathcal{B}|$ is a number of experience tuples in the batch of experience tuples, each $(s, a, r)$ is an experience tuple in the batch of experience tuples $\mathcal{B}$, wherein $s$ is the first observation, $a$ is the action, and $r$ is the reward, $\mathbb{I}[\cdot]$ is an indicator function, $A^{\pi}(a, s)$ is the advantage value for the experience tuple, and $\pi_{\theta}(a|s)$ is the action score for the action in the experience tuple that is generated by processing the first observation in the experience tuple using the policy neural network.

7. The method of any preceding claim, further comprising, at each of one or more of the plurality of iterations:

generating a plurality of new experience tuples using the action selection system, an expert action selection policy, or both; and
adding the new experience tuples to the replay buffer; wherein generating a plurality of new experience tuples comprises, at each of one or more time steps:

receiving a current observation for the time step;
selecting an action to be performed by the agent at the time step using the action selection system or the expert action selection policy;
receiving a next observation and a reward resulting from the agent performing the selected action; and
generating a new experience tuple comprising the current observation, the selected action, the next observation, and the reward; in particular wherein selecting the action to be performed by the agent at the time step using the action selection system or the expert action selection policy comprises stochastically selecting between using the action selection system or the expert action selection policy to select the action to be performed by the agent at the time step.

8. The method of claim 7, wherein selecting an action to be performed by the agent at a time step using the action selection system comprises:

processing the current observation for the time step using the policy neural network to generate a respective action score for each action in the set of possible actions;
processing the current observation for the time step using the Q neural network to generate a respective Q value for each action in the set of possible actions;
determining a final action score for each action based on: (i) the action score for the action, and (ii) the Q value for the action; and
selecting the action to be performed by the agent in accordance with the final action scores.

9. The method of claim 8, wherein the final action score for an action is computed as:

$$\pi(a|s) \cdot \exp\left(\frac{Q(s,a)}{\eta_s}\right)$$

wherein $\pi(a|s)$ is the action score for the action, $Q(s,a)$ is the Q value for the action, and $\eta_s$ is a temperature parameter.

10. A system comprising:

   one or more computers; and
   one or more storage devices communicatively coupled to the one or more computers, wherein the one or more storage devices store instructions that, when executed by the one or more computers, cause the one or more computers to perform operations of the respective method of any one of claims 1-9.

11. One or more non-transitory computer storage media storing instructions that when executed by one or more computers cause the one or more computers to perform operations of the respective method of any one of claims 1-9.

**Patentansprüche**

1. Verfahren, das durch ein oder mehrere Datenverarbeitungsgeräte zum Trainieren eines Aktionsauswahlsystems (100) durchgeführt wird, das verwendet wird, um Aktionen auszuwählen, die durch einen Agenten (114) durchzuführen sind, der mit einer Umgebung (116) interagiert, um eine Aufgabe durchzuführen, wobei das Aktionsauswahlsystem ein neuronales Netzwerk (104) und ein Richtliniennetzwerk (106) umfasst, wobei bei jeder einer Vielzahl von Iterationen das Verfahren Folgendes umfasst:

   Erlangen eines Stapels von Erfahrungstupeln (204), die frühere Interaktionen einer simulierten oder realen Version des Agenten mit der Umgebung von einem Wiederholungspuffer (102) kennzeichnen, wobei jedes Erfahrungstupel Folgendes umfasst: (i) eine erste Beobachtung, die einen Zustand der Umgebung kennzeichnet, (ii) eine Aktion, die durch den Agenten als Reaktion auf die erste Beobachtung durchgeführt wird, (iii) eine zweite Beobachtung, die einen Zustand der Umgebung kennzeichnet, nachdem der Agent die Aktion als Reaktion auf die erste Beobachtung durchgeführt hat, und (iv) eine Belohnung, die als Ergebnis des Agenten empfangen wird, der die Aktion als Reaktion auf die erste Beobachtung durchgeführt hat;
   für jedes Erfahrungstupel Bestimmen eines Zustandswertes (224) für die zweite Beobachtung in dem Erfahrungstupel durch Wichtigkeitsabfrageaktionen unter Verwendung des Richtliniennetzwerks; und
   Bestimmen einer Aktualisierung der aktuellen Werte eines Satzes von Q neuronalen Netzwerkparametern des Q neuronalen Netzwerks unter Verwendung der Zustandswerte (224) für die zweiten Beobachtungen in den Erfahrungstupeln;
   wobei das Verfahren ferner Folgendes umfasst:
   Bestimmen des Zustandswertes für die zweite Beobachtung als Linearkombination der Q-Werte für die mit Wichtigkeit abgetasteten Aktionen (214) durch:

   Bestimmen eines Temperaturfaktors basierend auf den Q-Werten für die abgetasteten Aktionen;
   Bestimmen eines jeweiligen modifizierten Q-Wertes für jede abgetastete Aktion als ein Verhältnis von: (i) dem Q-Wert für die abgetastete Aktion und (ii) dem Temperaturfaktor;
   Anwenden einer Softmax-Funktion auf die modifizierten Q-Werte, um einen Gewichtungsfaktor für jede abgetastete Aktion zu bestimmen; und
   Bestimmen des Zustandswertes für die zweite Beobachtung als lineare Kombination der Q-Werte für die abgetastete Aktion, wobei der Q-Wert für jede abgetastete Aktion durch den Gewichtungsfaktor für die abgetastete Aktion skaliert wird;
   wobei der Zustandswert für die zweite Beobachtung wie folgt berechnet wird:

$$V^{\pi}(s') = \sum_{j=1}^{M} w_j \cdot Q_{\phi'}(a_j, s')$$

*wobei V<sup>π</sup>(s')* der Zustandswert für die zweite Beobachtung ist, *j* die abgetasteten Aktionen indiziert, *M* eine Anzahl von abgetasteten Aktionen ist, $w_j$ der Gewichtungsfaktor für die abgetastete Aktion $a_j$ ist, $Q_{\phi'}(a_j, s')$ der Q-Wert für die abgetastete Aktion $a_j$ ist und jeder Gewichtungsfaktor $w_j$ wie folgt berechnet wird:

$$w_j = \frac{\exp\left(\frac{Q_{\phi'}(a_j, s')}{\eta_s}\right)}{\sum_{k=1}^{M} \exp\left(\frac{Q_{\phi'}(a_k, s')}{\eta_s}\right)}$$

wobei *k* die abgetasteten Aktionen indiziert und $\eta_s$ der Temperaturfaktor ist; und
wobei die Q-Zielfunktion wie folgt berechnet wird:

$$\frac{1}{|\mathcal{B}|} \sum_{(s,a,r,s')\in\mathcal{B}} \left(r + \gamma V^{\pi}(s') - Q_{\phi}(a,s)\right)^2$$

wobei $|\mathcal{B}|$ eine Anzahl von Erfahrungstupeln in dem Stapel von Erfahrungstupeln ist, jedes (*s*, *a*, *r*, *s'*) ein Erfahrungstupel in dem Stapel von Erfahrungstupeln $\mathcal{B}$ ist, wobei s die erste Beobachtung, a die Aktion, *r* die Belohnung und *s'* die zweite Beobachtung ist, *γ* ein Abzinsungsfaktor ist, *V*<sup>π</sup>(*s'*) der Zustandswert für die zweite Beobachtung in dem Erfahrungstupel ist, und $Q_{\phi}(a, s)$ der Q-Wert für die Aktion in dem Erfahrungstupel ist; und
wobei das Bestimmen der Aktualisierung der aktuellen Werte eines Satzes von Q neuronalen Netzwerkparametern des Q neuronalen Netzwerks unter Verwendung der Zustandswerte für die zweiten Beobachtungen in den Erfahrungstupeln das Bestimmen eines Gradienten der Q Zielfunktion für jedes Erfahrungstupel und das Bestimmen der Aktualisierung der aktuellen Werte des Satzes von Q neuronalen Netzwerkparametern unter Verwendung des Gradienten umfasst;
wobei der Agent einen mechanischen Agenten umfasst, wobei das Verfahren ferner das Verwenden des Aktionsauswahlsystems umfasst, um Aktionen auszuwählen, die von dem mechanischen Agenten durchzuführen sind, wenn er mit einer Umgebung der realen Welt interagiert, um eine Aufgabe in der Umgebung der realen Welt durchzuführen, wobei sich die Beobachtungen auf die Umgebung der realen Welt beziehen und von einer oder mehreren Sensorvorrichtungen stammen, die die Umgebung der realen Welt erfassen; oder
wobei der Agent ein elektronischer Agent ist, der dazu konfiguriert ist, Aktionen zum Steuern oder Auferlegen von Betriebsbedingungen für elektronische und/oder mechanische Ausrüstungsgegenstände zu steuern, wobei das Verfahren ferner das Verwenden des Aktionsauswahlsystems beinhaltet, um Aktionen auszuwählen, die durch den Agenten durchzuführen sind, wenn er mit elektronischen und/oder mechanischen Ausrüstungsgegenständen innerhalb einer Umgebung der realen Welt einer Produktionsanlage oder einer Serviceeinrichtung interagiert, wobei die Beobachtungen Beobachtungen des Energie- oder Wasserverbrauchs durch die Ausrüstungsgegenstände von einem oder mehreren Sensoren beinhalten, die Teile der Produktionsanlage oder der Serviceeinrichtung überwachen, wobei das Aktionsauswahlsystem trainiert wird, um den Energieverbrauch oder den Wasserverbrauch durch die Produktionsanlage oder die Serviceeinrichtung zu reduzieren.

2. Verfahren nach Anspruch 1, wobei das Bestimmen des Temperaturfaktors basierend auf den Q-Werten für die abgetasteten Aktionen bei jeder von einer oder mehreren Optimierungsiterationen Folgendes umfasst:

Bestimmen eines Gradienten einer dualen Funktion in Bezug auf den Temperaturfaktor, wobei die duale Funktion abhängt von: (i) dem Temperaturfaktor und (ii) den Q-Werten für die abgetasteten Aktionen;

Anpassen eines aktuellen Wertes des Temperaturfaktors unter Verwendung des Gradienten der Doppelfunktion in Bezug auf den Temperaturfaktor.

3. Verfahren nach Anspruch 2, wobei die Doppelfunktion wie folgt berechnet wird:

$$g(\eta_s) = \frac{1}{|\mathcal{B}|}\eta_s\epsilon + \eta_s \log \frac{1}{M}\sum_{j=1}^{M}\exp\left(\frac{Q_{\phi'}(a_j, s)}{\eta_s}\right)$$

wobei $g(\eta_s)$ die duale Funktion ist, die für den Temperaturfaktor $\eta_s$ ausgewertet wird, $|\mathcal{B}|$ eine Anzahl von Erfahrungs-tupeln im Stapel von Erfahrungstupeln $\mathcal{B}$ bezeichnet, $\varepsilon$ ein Regularisierungsparameter ist, $j$ die abgetasteten Aktionen indiziert, $M$ eine Anzahl von abgetasteten Aktionen ist und $Q_{\phi'}(a_j, s)$ der Q-Wert für die abgetastete Aktion $a_j$ ist.

4. Verfahren nach einem der vorhergehenden Ansprüche, ferner umfassend bei jeder der Vielzahl von Iterationen das Bestimmen einer Aktualisierung der aktuellen Werte eines Satzes von Parametern des Richtliniennetzwerks des neuronalen Netzwerks, umfassend:
für jedes Erfahrungstupel:

Verarbeiten der ersten Beobachtung in dem Erfahrungstupel unter Verwendung des neuronalen Netzwerks Q, um einen Q-Wert für die Aktion in dem Erfahrungstupel zu erzeugen;
Bestimmen eines Zustandswertes für die erste Beobachtung in dem Erfahrungstupel; und
Bestimmen eines Vorteilswerts für das Erfahrungstupel als Differenz zwischen: (i) dem Q-Wert für die Aktion in dem Erfahrungstupel und (ii) dem Zustandswert für die erste Beobachtung in dem Erfahrungstupel; und
Bestimmen der Aktualisierung der aktuellen Werte des Satzes von Parametern des neuronalen Netzwerks des Richtliniennetzwerks basierend auf nur den Erfahrungstupeln, die einen nicht-negativen Vorteilswert aufweisen.

5. Verfahren nach Anspruch 4, wobei das Bestimmen der Aktualisierung der aktuellen Werte des Satzes von Parametern des neuronalen Netzwerks des Richtliniennetzwerks basierend auf nur den Erfahrungstupeln, die einen nicht-negativen Vorteilswert aufweisen, Folgendes umfasst:

Bestimmen eines Gradienten einer Politikzielfunktion, die nur von den Erfahrungstupeln abhängt, die einen nicht negativen Vorteilswert aufweisen; und
Bestimmen der Aktualisierung der aktuellen Werte des Satzes von Parametern des neuronalen Netzwerks unter Verwendung des Gradienten.

6. Verfahren nach Anspruch 5, wobei für jedes Erfahrungstupel, das einen nicht-negativen Vorteilswert hat, die Richtlinienzielfunktion von einer Aktionsbewertung für die Aktion in dem Erfahrungstupel abhängt, die durch Verarbeiten einer ersten Beobachtung in dem Erfahrungstupel unter Verwendung des neuronalen Netzes erzeugt wird; insbesondere wobei die Richtlinienzielfunktion wie folgt berechnet wird:

$$-\frac{1}{|\mathcal{B}|}\sum_{(s,a,r)\in\mathcal{B}}\mathbb{I}[A^{\pi}(a, s) \geq 0]\log\pi_{\theta}(a|s)$$

wobei $|\mathcal{B}|$ eine Anzahl von Erfahrungstupeln in dem Stapel von Erfahrungstupeln ist, jedes $(s, a, r)$ einErfahrungstupel in dem Stapel von Erfahrungstupeln ist $\mathcal{B}$, wobei $s$ die erste Beobachtung, a die Aktion und $r$ die Belohnung ist, eine Indikatorfunktion $\mathbb{I}[\cdot]$ ist, $A^{\pi}(a, s)$ der Vorteilswert für das Erfahrungstupel ist und $\pi_{\theta}(a|s)$ die Aktionsbewertung für die Aktion in dem Erfahrungstupel ist, die durch Verarbeiten der ersten Beobachtung in dem Erfahrungstupel unter Verwendung des neuronalen Netzwerks erzeugt wird.

7. Verfahren nach einem der vorhergehenden Ansprüche, bei jeder der Vielzahl von Iterationen ferner umfassend:

Erzeugen einer Vielzahl von neuen Erfahrungstupeln unter Verwendung des Aktionsauswahlsystems, von Expertenaktionsauswahlsrichtlinien oder beidem; und

Hinzufügen der neuen Erfahrungstupel zu dem Wiedergabepuffer;

wobei das Erzeugen einer Vielzahl von neuen Erfahrungstupeln in jedem von einem oder mehreren Zeitschritten Folgendes umfasst:

Empfangen einer aktuellen Beobachtung für den Zeitschritt;

Auswählen einer Aktion, die durch den Agenten in dem Zeitschritt durchzuführen sind, unter Verwendung des Aktionsauswahlsystems oder von Expertenaktionsauswahlsrichtlinien;

Empfangen einer nächsten Beobachtung und einer Belohnung, die sich daraus ergibt, dass der Agent die ausgewählte Aktion durchführt; und

Erzeugen eines neuen Erfahrungstupels, das die aktuelle Beobachtung, die ausgewählte Aktion, die nächste Beobachtung und die Belohnung umfasst; wobei insbesondere das Auswählen der durch den Agenten in dem Zeitschritt durchzuführenden Aktion unter Verwendung des Aktionsauswahlsystems oder von Expertenaktionsauswahlsrichtlinien ein stochastisches Auswählen zwischen der Verwendung des Aktionsauswahlsystems oder der Expertenaktionsauswahlsrichtlinien umfasst, um die durch den Agenten in dem Zeitschritt durchzuführende Aktion auszuwählen.

8. Verfahren nach Anspruch 7, wobei das Auswählen einer durch den Agenten durchzuführenden Aktion zu einem Zeitschritt unter Verwendung des Aktionsauswahlsystems Folgendes umfasst:

Verarbeiten der aktuellen Beobachtung für den Zeitschritt unter Verwendung des neuronalen Netzwerks, um für jede Aktion in der Menge der möglichen Aktionen eine entsprechende Aktionsbewertung zu erzeugen;

Verarbeiten der aktuellen Beobachtung für den Zeitschritt unter Verwendung des neuronalen Netzwerks Q, um einen entsprechenden Q-Wert für jede Aktion in der Menge der möglichen Aktionen zu erzeugen;

Bestimmen einer endgültigen Aktionsbewertung für jede Aktion basierend auf: (i) der Aktionsbewertung für die Aktion, und (ii) dem Q-Wert für die Aktion; und

Auswählen der durch den Agenten durchzuführenden Aktion gemäß der endgültigen Aktionsbewertung.

9. Verfahren nach Anspruch 8, wobei die endgültige Aktionsbewertung für eine Aktion wie folgt berechnet wird:

$$\pi(a|s) \cdot \exp\left(\frac{Q(s,a)}{\eta_s}\right)$$

wobei $\pi(a|s)$ die Aktionsbewertung für die Aktion ist, $Q(s, a)$ der Q-Wert für die Aktion ist und $\eta_s$ ein Temperatur-parameter ist.

10. System, umfassend:

einen oder mehrere Computer; und

eine oder mehrere Speichervorrichtungen, die kommunikativ mit dem einen oder den mehreren Computern gekoppelt sind, wobei die eine oder die mehreren Speichervorrichtungen Anweisungen speichern, die, wenn sie durch den einen oder die mehreren Computer ausgeführt werden, den einen oder die mehreren Computer veranlassen, Vorgänge des jeweiligen Verfahrens nach einem der Ansprüche 1-9 durchzuführen.

11. Ein oder mehrere nichttransitorische Computerspeichermedien, die Anweisungen speichern, die, wenn sie durch einen oder mehrere Computer ausgeführt werden, den einen oder die mehreren Computer veranlassen, Vorgänge des jeweiligen Verfahrens nach einem der Ansprüche 1-9 durchzuführen.

**Revendications**

1. Procédé mis en œuvre par un ou plusieurs appareils de traitement de données pour entraîner un système de sélection d'actions (100) qui est utilisé pour sélectionner les actions à réaliser par un agent (114) interagissant avec un environnement (116) pour réaliser une tâche, dans lequel le système de sélection d'actions comprend un réseau neuronal Q (104) et un réseau neuronal de politique (106), le procédé comprenant, à chaque pluralité d'itérations :

l'obtention d'un lot de tuples d'expérience (204) caractérisant les interactions précédentes d'une version simulée ou réelle de l'agent avec l'environnement à partir d'un tampon de relecture (102), dans lequel chaque tuple d'expérience comprend : (i) une première observation caractérisant un état de l'environnement, (ii) une action réalisée par l'agent en réponse à la première observation, (iii) une seconde observation caractérisant un état de l'environnement après que l'agent a réalisé l'action en réponse à la première observation, et (iv) une récompense reçue en conséquence de l'exécution de l'action par l'agent en réponse à la première observation ;

pour chaque tuple d'expérience, la détermination d'une valeur d'état (224) pour la seconde observation dans le tuple d'expérience par des actions d'échantillonnage d'importance en utilisant le réseau neuronal de politique ; et

la détermination d'une mise à jour des valeurs actuelles d'un ensemble de paramètres de réseau neuronal Q du réseau neuronal Q en utilisant les valeurs d'état (224) pour les secondes observations dans les tuples d'expérience ;

le procédé comprenant également :

la détermination de la valeur d'état pour la seconde observation comme une combinaison linéaire des valeurs Q pour les actions échantillonnées d'importance (214) en :

déterminant un facteur de température basé sur les valeurs Q pour les actions échantillonnées ;

déterminant une valeur Q modifiée respective pour chaque action échantillonnée sous la forme d'un rapport entre : (i) la valeur Q pour l'action échantillonnée, et (ii) le facteur de température ;

appliquant une fonction softmax aux valeurs Q modifiées pour déterminer un facteur de pondération pour chaque action échantillonnée ; et

déterminant la valeur d'état pour la seconde observation comme une combinaison linéaire des valeurs Q pour l'action échantillonnée, dans lequel la valeur Q pour chaque action échantillonnée est mise à l'échelle par le facteur de pondération pour l'action échantillonnée ;

dans lequel la valeur d'état pour la seconde observation est calculée comme suit :

$$V^{\pi}(s') = \sum_{j=1}^{M} w_j \cdot Q_{\phi'}(a_j, s')$$

dans lequel $V^{\pi}(s')$ est la valeur d'état pour la seconde observation, $j$ indexe les actions échantillonnées, $M$ est un nombre d'actions échantillonnées, $w_j$ est le facteur de pondération pour l'action échantillonnée $a_j$, $Q_{\phi}(a_j, s')$ est la valeur Q pour l'action échantillonnée $a_j$, et chaque facteur de pondération $w_j$ est calculé comme suit :

$$w_j = \frac{\exp\left(\frac{Q_{\phi'}(a_j, s')}{\eta_s}\right)}{\sum_{k=1}^{M} \exp\left(\frac{Q_{\phi'}(a_k, s')}{\eta_s}\right)}$$

dans lequel $k$ indexe les actions échantillonnées et $\eta_s$ est le facteur de température ; et

dans lequel la fonction objective Q est calculée comme suit :

$$\frac{1}{|\mathcal{B}|} \sum_{(s,a,r,s') \in \mathcal{B}} \left(r + \gamma V^{\pi}(s') - Q_{\phi}(a, s)\right)^2$$

dans lequel $|\mathcal{B}|$ est un nombre de tuples d'expérience dans le lot de tuples d'expérience, chaque $(s, a, r, s')$ est un tuple d'expérience dans le lot de tuples d'expérience $\mathcal{B}$, dans lequel s est la première observation, a est l'action, $r$ est la récompense et $s'$ est la seconde observation, $\gamma$ est un facteur d'actualisation, $V^{\pi}(s')$ est la valeur d'état pour la seconde observation dans le tuple d'expérience, et $Q_{\phi}(a, s)$ est la valeur Q pour l'action dans le tuple d'expérience ; et

dans lequel la détermination de la mise à jour des valeurs actuelles d'un ensemble de paramètres de réseau neuronal Q du réseau neuronal Q en utilisant les valeurs d'état pour les secondes observations dans les tuples d'expérience comprend, pour chaque tuple d'expérience, la détermination d'un gradient de la fonction objective Q, et la détermination de la mise à jour des valeurs actuelles de l'ensemble de paramètres de réseau neuronal Q en utilisant le gradient ;

dans lequel l'agent comprend un agent mécanique, le procédé comprenant également l'utilisation du système de sélection d'actions pour sélectionner des actions à réaliser par l'agent mécanique lors de l'interaction avec un environnement réel pour réaliser une tâche dans l'environnement réel, dans lequel les observations se rapportent à l'environnement réel et proviennent d'un ou plusieurs dispositifs de détection qui détectent l'environnement réel ; ou

dans lequel l'agent est un agent électronique configuré pour contrôler des actions destinées à contrôler ou imposer des conditions de fonctionnement sur des éléments d'équipement électroniques et/ou mécaniques, le procédé comprenant également l'utilisation du système de sélection d'actions pour sélectionner des actions à réaliser par l'agent lors de l'interaction avec des éléments d'équipement électroniques et/ou mécaniques dans un environnement réel d'une usine de fabrication ou l'installation de service, dans lequel les observations comportent des observations sur l'utilisation d'énergie ou d'eau par les éléments d'équipement, provenant d'un ou plusieurs capteurs surveillant une partie de l'usine de fabrication ou de l'installation de service, dans lequel le système de sélection d'actions est entraîné à réduire la consommation d'énergie ou d'eau par l'usine de production ou l'installation de service.

2. Procédé selon la revendication 1, dans lequel la détermination du facteur de température en fonction des valeurs Q des actions échantillonnées comprend, à chacune d'une ou plusieurs itérations d'optimisation :

la détermination d'un gradient d'une double fonction par rapport au facteur de température, dans lequel la double fonction dépend : (i) du facteur de température, et (ii) des valeurs Q pour les actions échantillonnées ;
le réglage d'une valeur actuelle du facteur de température en utilisant le gradient de la double fonction par rapport au facteur de température.

3. Procédé selon la revendication 2, dans lequel la double fonction est calculée comme suit :

$$g(\eta_s) = \frac{1}{|\mathcal{B}|} \eta_s \epsilon + \eta_s \log \frac{1}{M} \sum_{j=1}^{M} \exp\left(\frac{Q_{\phi'}(a_j, s)}{\eta_s}\right)$$

dans lequel $g(\eta_s)$ est la double fonction évaluée pour le facteur de température $\eta_s$, $|\mathcal{B}|$ désigne un nombre de tuples d'expérience dans le lot de tuples d'expérience, $\varepsilon$ est un paramètre de régularisation, $j$ indexe les actions échantillonnées, $M$ est un nombre d'actions échantillonnées, et $Q_{\phi'}(a_j, s)$ est la valeur Q pour l'action échantillonnée $a_j$.

4. Procédé selon une quelconque revendication précédente, comprenant également, à chaque itération, la détermination d'une mise à jour des valeurs actuelles d'un ensemble de paramètres du réseau neuronal de politique, comprenant :
pour chaque tuple d'expérience :

le traitement de la première observation dans le tuple d'expérience en utilisant le réseau neuronal Q pour générer une valeur Q pour l'action dans le tuple d'expérience ;
la détermination d'une valeur d'état pour la première observation dans le tuple d'expérience ; et
la détermination d'une valeur d'avantage pour le tuple d'expérience comme une différence entre : (i) la valeur Q pour l'action dans le tuple d'expérience, et (ii) la valeur d'état pour la première observation dans le tuple d'expérience ; et
la détermination de la mise à jour des valeurs actuelles de l'ensemble des paramètres du réseau neuronal de politique du réseau neuronal de politique en se basant uniquement sur les tuples d'expérience ayant une valeur d'avantage non négative.

5. Procédé selon la revendication 4, dans lequel la détermination de la mise à jour des valeurs actuelles de l'ensemble des paramètres du réseau neuronal de politique du réseau neuronal de politique en se basant uniquement sur les tuples d'expérience ayant une valeur d'avantage non négative comprend :

la détermination d'un gradient d'une fonction objective de politique qui dépend uniquement des tuples d'expérience ayant une valeur d'avantage non négative ; et

la détermination de la mise à jour des valeurs actuelles des paramètres de réseau en utilisant le gradient.

6. Procédé selon la revendication 5, dans lequel, pour chaque tuple d'expérience ayant une valeur d'avantage non négative, la fonction d'objectif de politique dépend d'un score d'action pour l'action dans le tuple d'expérience qui est généré par le traitement d'une première observation dans le tuple d'expérience en utilisant le réseau neuronal de politique ; en particulier dans lequel la fonction d'objectif de politique est calculée comme suit :

$$-\frac{1}{|\mathcal{B}|} \sum_{(s,a,r)\in\mathcal{B}} \mathbb{I}[A^{\pi}(a,s) \geq 0] \log \pi_{\theta}(a|s)$$

dans lequel $|\mathcal{B}|$ est un nombre de tuples d'expérience dans le lot de tuples d'expérience, chaque $(s, a, r)$ est un tuple d'expérience dans le lot de tuples d'expérience $\mathcal{B}$, dans lequel $s$ est la première observation, a est l'action, $r$ est la récompense, $\mathbb{I}[\cdot]$ est une fonction caractéristique, $A^{\pi}(a, s)$ est la valeur d'avantage pour le tuple d'expérience, et $\pi_{\theta}(a|s)$ est le score d'action pour l'action dans le tuple d'expérience qui est généré par traitement de la première observation dans le tuple d'expérience en utilisant le réseau neuronal de politique.

7. Procédé selon une quelconque revendication précédente, comprenant également, sur chacune de l'une ou plusieurs de la pluralité d'itérations :

la génération d'une pluralité de nouveaux tuples d'expérience en utilisant le système de sélection d'actions, une politique de sélection d'actions experte, ou les deux ; et
l'ajout des nouveaux tuples d'expérience au tampon de relecture ; dans lequel la génération d'une pluralité de nouveaux tuples d'expérience comprenant, à chacun d'un ou plusieurs stades temporels :

la réception d'une observation actuelle pour le stade temporel ;
la sélection d'une action à réaliser par l'agent au stade temporel en utilisant le système de sélection d'actions ou la politique de sélection d'actions experte ;
la réception d'une observation suivante et une récompense résultant de l'exécution par l'agent de l'action sélectionnée ; et
la génération d'un nouveau tuple d'expérience comprenant l'observation actuelle, l'action sélectionnée, l'observation suivante et la récompense ; en particulier dans lequel la sélection de l'action à réaliser par l'agent au stade temporel en utilisant le système de sélection d'action ou la politique de sélection d'action experte comprend une sélection stochastique entre l'utilisation du système de sélection d'action ou de la politique de sélection d'action experte pour sélectionner l'action à réaliser par l'agent au stade temporel.

8. Procédé selon la revendication 7, dans lequel la sélection d'une action à réaliser par l'agent à un stade temporel en utilisant le système de sélection d'actions comprend :

le traitement de l'observation actuelle pour le stade temporel en utilisant le réseau neuronal de politique pour générer un score d'action respectif pour chaque action dans l'ensemble des actions possibles ;
le traitement de l'observation actuelle pour le stade temporel en utilisant le réseau neuronal Q pour générer une valeur Q respective pour chaque action dans l'ensemble des actions possibles ;
la détermination d'un score d'action final pour chaque action en fonction : (i) du score d'action pour l'action, et (ii) de la valeur Q pour l'action ; et
la sélection de l'action à réaliser par l'agent en fonction des scores d'action finaux.

9. Procédé selon la revendication 8, dans lequel le score d'action final pour une action est calculé comme suit :

$$\pi(a|s) \cdot \exp\left(\frac{Q(s,a)}{\eta_s}\right)$$

dans lequel $\pi(a|s)$ est le score d'action pour l'action, $Q(s, a)$ est la valeur Q pour l'action et $\eta_s$ est un paramètre de température.

10. Système comprenant :

un ou plusieurs ordinateurs ; et
un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 9.

11. Un ou plusieurs supports de stockage informatique non transitoire stockant des instructions qui, lorsqu'elles sont exécutées par un ou plusieurs ordinateurs, amènent les un ou plusieurs ordinateurs à réaliser des opérations du procédé respectif selon l'une quelconque des revendications 1 à 9.

**ACTION SELECTION SYSTEM 100**

ACTION
112

Q VALUES 108    ACTION SCORES 110

AGENT 114

Q NEURAL NETWORK
104

POLICY NEURAL
NETWORK 106

ENVIRONMENT 116

REWARD
118

OBSERVATION
120

REPLAY
BUFFER 102

TRAINING SYSTEM 200

FIG. 1

REPLAY
BUFFER 102

**TRAINING SYSTEM 200**

EXPER. TUPLE
BATCH 204

FIRST
OBSERVATIONS
206

SECOND
OBSERVATIONS
216

**POLICY
NETWORK 104**

ACTION SCORES
210

SAMPLING
ENGINE 212

SAMPLED
ACTIONS 214

**Q NETWORK
106**

Q NETWORK
PARAM. 228

Q VALUES 220

UPDATE
ENGINE 226

STATE VALUE
ENGINE 222

STATE VALUES
224

FIG. 2

300

OBTAIN A BATCH OF EXPERIENCE TUPLES, EACH EXPERIENCE TUPLE INCLUDING (1) A FIRST OBSERVATION, (2) AN ACTION PERFORMED BY THE AGENT, (3) A RESULTING SECOND OBSERVATION, AND (4) A CORRESPONDING REWARD ⟍302

GENERATE ACTION SCORES BY PROCESSING FIRST OBSERVATION USING POLICY NETWORK ⟍304

SAMPLE MULTIPLE ACTIONS IN ACCORDANCE WITH ACTION SCORES ⟍306

GENERATE RESPECTIVE Q VALUE FOR EACH SAMPLED ACTION USING Q NETWORK ⟍308

DETERMINE STATE VALUE FOR SECOND OBSERVATION USING THE Q VALUES ⟍310

FOR EACH EXPERIENCE TUPLE

UPDATE THE CURRENT VALUES OF Q NETWORK PARAMETERS USING THE STATE VALUES ⟍312

OPTIONALLY, DETERMINE UPDATE TO THE CURRENT VALUES OF POLICY NETWORK PARAMETERS ⟍314

TERMINATION CRITERIA MET? ⟍316

No

Yes

TERMINATE TRAINING LOOP ⟍318

FIG. 3

400 ⮑

RECEIVE Q VALUES FOR SAMPLED ACTIONS ⟍402

↓

GENERATE A TEMPERATURE FACTOR BASED ON Q VALUES ⟍404

↓

GENERATE RESPECTIVE A WEIGHT FACTOR FOR EACH Q VALUE BASED ON THE Q VALUES AND THE TEMPERATURE FACTOR ⟍406

↓

DETERMINE THE STATE VALUE AS A LINEAR COMBINATION OF THE Q VALUES USING THE RESPECTIVE WEIGHT FACTORS ⟍408

FIG. 4

500

RECEIVE THE BATCH OF EXPERIENCE TUPLES AND THE RESPECTIVE STATE VALUES FOR THE SECOND OBSERVATIONS ⟋502

GENERATE A Q VALUE FOR THE ACTION USING THE Q NETWORK ⟋504

FOR EACH EXPERIENCE TUPLE

DETERMINE A TARGET Q VALUE FOR THE ACTION USING THE STATE VALUE FOR THE RESPECTIVE SECOND OBSERVATION ⟋506

UPDATE THE CURRENT VALUES OF THE SET OF Q NETWORK PARAMETERS USING A GRADIENT OF A Q OBJECTIVE FUNCTION BASED ON: (1) THE Q VALUE AND (2) THE TARGET Q VALUE ⟋508

FIG. 5

600

RECEIVE THE BATCH OF EXPERIENCE TUPLES ⌒602

GENERATE A Q VALUE FOR THE ACTION USING THE Q NETWORK ⌒604

FOR EACH EXPERIENCE TUPLE

DETERMINE A STATE VALUE FOR THE FIRST OBSERVATION ⌒606

GENERATE AN ADVANTAGE VALUE BASED ON THE Q VALUE AND THE STATE VALUE ⌒608

UPDATE THE CURRENT VALUES OF THE POLICY NETWORK PARAMETERS USING A GRADIENT OF A POLICY OBJECTIVE FUNCTION BASED ON THE ADVANTAGE VALUES ⌒610

FIG. 6

700

RECEIVE A CURRENT OBSERVATION FOR THE TIME STEP — 702

SELECT ACTION BASED ON ACTION SELECT SYSTEM OR SUB-OPTIMAL EXPERT ACTION SELECTION SYSTEM? — 704

ACTION SELECTION SYSTEM

SUB-OPTIMAL EXPERT ACTION SELECTION POLICY

SELECT ACTION — 706

SELECT SUB-OPTIMAL EXPERT ACTION — 708

RECEIVE A NEXT OBSERVATION AND A REWARD BASED ON THE SELECTED ACTION — 710

GENERATE A NEW EXPERIENCE TUPLE BASED ON (1) THE CURRENT OBSERVATION, (2) THE SELECTED ACTION, (3) THE NEXT OBSERVATION, AND (4) THE REWARD — 712

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020104680 A

- WO 2020099672 A

**Non-patent literature cited in the description**

- **RAE JEONG et al.** Learning Dexterous Manipulation from Suboptimal Experts. *arXiv:2010.08587v2*, 05 January 2021